# EUROPEAN PATENT APPLICATION

(11) **EP 3 299 949 A1**
(43) Date of publication of application: **28.03.2018**
(21) Application number: 17190029.3
(22) Date of filing: 08.09.2017
(51) Int. Cl.: G06F 3/12

(54) **METHOD OF STORING RECORD INFORMATION**

(30) Priority: 21.09.2016 EP 16189986
(71) Applicant: OCE Holding B.V., 5914 CA Venlo (NL)
(72) Inventor: TAPUCHIEVICI, Andrei, 5914 CA Venlo (NL); DRIHA, Catalin Claudiu, 5914 CA Venlo (NL)
(74) Representative: OCE IP Department

(57) **Abstract**

A method of storing record information in a document (22b) in which a record structure of the information is encoded in metadata (30), the document including attributes that specify how the information is to be rendered when the document is reproduced, characterized in that the metadata (30) are encoded in the form of printable and machine-readable objects with attributes that prevent these objects from being rendered.

## Description

The invention relates to a method of storing record information in a document in which a record structure of the information is encoded in metadata, the document including attributes that specify how the information is to be rendered when the document is reproduced.

In the present specification, the term "document" is to designate a set of information that can be reproduced on a display and/or as a hard copy on a printer. The term "record information" is to designate that the document is organized in a certain structure, the record structure, in which an item of information in the document is assigned to a record. The records may be structured in various way such as a simple sequence of records or a tree of records. When a document contains record information, the items of information in the document will frequently comprise not only "printable objects", i.e. items of information that can be rendered on the display or the hard copy, but also so-called metadata. The record structure is typically encoded as record information in the metadata. For example, the metadata may include definitions and properties of different classes of information and may further specify for each printable object to which of the classes it belongs.

The invention relates in particular to the art of variable data printing (VDP), wherein the documents are structured to comprise a number of subsets, which will be designated as "copies" hereinafter, and the information is classified in two main classes designated as "static content" and "variable content", respectively. The static content consists of items of information which appear identically in each copy, whereas the variable content consists of items of information which vary dynamically from copy to copy.

An illustrative example is personalized direct mailing, wherein the variable content consists of addresses and other personalized items whereas the static content consists of information which will be the same for each recipient.

A VDP document will conveniently be stored in a relatively compact format such as PDF/VT in which the record structure is encoded in metadata. Such a document will contain the static content only once, and each copy or record will only include references to the respective static content, so that the data volume is reduced significantly. When the document is being prepared for printing, a print preprocessor, a print server or print controller or the printer itself will be configured to expand the document into a "flat" or expanded format in which the static content is explicitly included in each copy or record, so that the expanded document may be treated as a "normal" print job without having to care for metadata. On the other hand, the data volume will be considerably large because it includes multiple copies of the static content. Note that the expansion into a "flat" format may be performed by the raster image processor (RIP) during the process of rasterization of the document into a raster image, such as supported by the Adobe PDF Print Engine (APPE) by Adobe Systems Inc. The present invention may advantageously be applied in cases where a RIP is employed that is not capable of such expansion and where the expansion is performed during a separate expansion step performed before the rasterization. Furthermore, the invention may be applied in cases where the expanded file is to be generated directly from a static data source (e.g. a template file) and a dynamic data source (e.g. a database).

Typically, each copy of the document in the expanded format will consist of a certain number of sub-subsets (pages), and the total number of pages of the document will, for simpler VDP documents, be the number of pages per copy times the number of copies. For more complex VDP documents, the number of dynamic pages may vary per copy. Sometimes it is desired to extract individual pages or sets of pages from the document. For example, when the document has been printed and errors have occurred in the print process or a subsequent finishing process, some of the printed pages may have an inacceptable quality and it may be necessary to reprint these pages. Then, rather than printing the entire document once again, it will be desired to extract and reprint only the defective pages.

Specific tools, so-called document splitters, are available for extracting selected pages from a document. However, in case of a very large document with a large number of copies and a large number of pages per copy, it is inconvenient to identify the defective pages in the expanded document in order to issue a reprint for these pages. Moreover, when the defective pages include pages with static content, it would be necessary on the level of the expanded format to extract the pertinent pages from each individual copy, which involves a quite cumbersome operation.

It would therefore be desirable to extract the selected pages from the expanded document without inspecting a substantial number of pages in the expanded document to determine whether they correspond to a defective page that is to be reprinted. Furthermore, normal document splitters are not capable of appropriately handling metadata in this case if present.

It is therefore an object of the invention to provide a method of storing record information in a format that facilitates to rearrange, extract or delete pages or similar sub-units from a document while preserving the record information.

In the method according to the invention, in order to achieve this object, the metadata are encoded in the form of printable and machine-readable objects with attributes that prevent these objects from being rendered.

When this method is used for storing record information, the resulting document will contain only printable objects, grouped in pages or similar units which can be handled by any conventional document splitter. When pages which contain metadata are extracted from a parent document that has been established in accordance with the invention, the related metadata will also be present on the extracted pages, and the print preprocessor or other printing software and hardware will be capable of reading and processing these metadata in the same way as the metadata from the parent document even if intermediate tools manipulating the document are not aware of the metadata.

Thus, reprinting selected pages of a VDP document is greatly facilitated as selected pages can be identified by their metadata.

The invention also relates to a method and an apparatus for converting a compact document in which a record structure of information in the document is encoded in the form of non-printable metadata into a reformatted document, wherein the method as described above is used for storing information in the reformatted document.

More specific optional features of the invention are indicated in the dependent claims.

The metadata are preferably encoded in printable objects on the pages to which the metadata pertain.

The attributes that specify how the information is to be rendered when the document is reproduced may for example comprise color attributes, transparency attributes, position attributes and the like. Then, in order to prevent the printable objects that encode the metadata from being rendered, it is possible for example to encode the metadata in the form of text and to select a color attribute for the text to be the same as a color attribute for the background, so that the text will not be visible on the printed copy (or displayed image). A color attribute for the background may explicitly be a background color attribute of the printable objects, but are preferably an implicit color defined by the color of the recording medium used to render or print the objects on, or explicitly a foreground color attribute of another object, the other object being a background object in the sense that the printable objects are rendered in a position "on top" of the background object. The same result can be achieved by setting a transparency attribute of the text to "100% transparent". Another possibility is to select a position attribute that places the text onto a part of the page that is outside of the printable domain (e. g. outside the viewport of a page or outside the clipping path of an object).

Embodiment examples will now be described in conjunction with the drawings, wherein:
- Fig. 1: is a block diagram of a printing system employing a method according to the invention;
- Fig. 2: is a diagrammatic representation of a conventional VDP document;
- Fig. 3: is a diagrammatic representation of the document shown in Fig. 2, but reformatted in accordance with the invention;
- Fig. 4: is an enlarged view of a single page in the reformatted document shown in Fig. 3;
- Fig. 5: is a diagrammatic representation of a document obtained by extracting pages from the VDP document in accordance with the present invention.

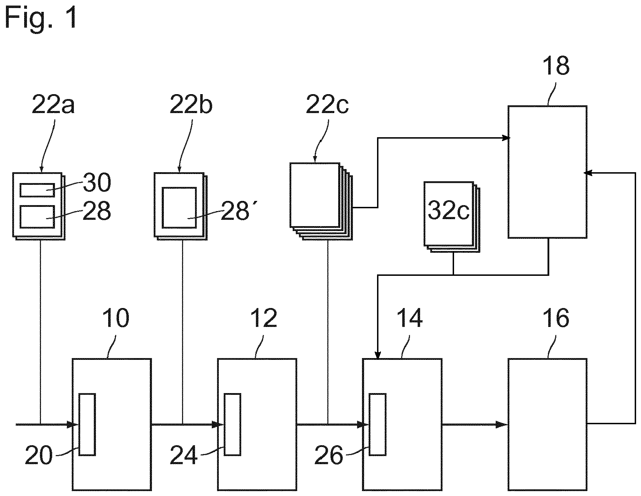

Fig. 1 schematically shows a printing system that is specifically adapted for VDP printing and comprises a document converter 10, a document expander 12, a print engine 14, a quality control section 16 and a document splitter 18. The document converter 10 has a memory 20 for receiving and storing documents 22a in a standard VDP format such as PDF/VT. The converter 10 further has program code for converting the document 22a into a reformatted document 22b which will then be sent to and stored in a memory 24 of the document expander 12.

The document expander 12 has program code for expanding the reformatted document 22b into an expanded document 22c which will then be sent to and stored in a memory 26 of the print engine 14.

It will be understood that the document converter 10 and the document expander 12 may be implemented in a print preprocessor or a print server or may form part of a print controller of the print engine 14.

The document 22a, and accordingly also the documents 22b and 22c, contain information to be printed, and this information is grouped into certain units, e.g. into pages each of which is to be printed on a sheet of a recording medium in the print engine 14.

In accordance with the PDF/VT standard, the document 22a specifies a plurality of records to be printed and includes both variable content (e.g. variable text) which varies from record to record, and static content, e.g. in the form of so-called reusable objects, which is typically replicated in each record. In order to specify the record structure that is constituted by the variable content and the static content, the document 22a includes not only printable objects 28 which will actually appear on the printed copies, but also metadata 30 which specify a structure of the document 22a, for example defining a sequence of records wherein each record corresponds to a set of sheets to be mailed to an individual customer. The metadata may comprise further information for supporting selecting records or pages belonging to records, such as a customer identifier, a mailing address, or some other identifier.

The document expander 12 expands the document into a format in which each copy is composed of a number of pages in the form in which they are to be printed, i.e. with replica of the static content included in each copy. In the print engine 14, each page of the document 22c will be converted into a bitmap by raster image processing and will be printed on a recording sheet.

The document 22b has been converted by the converter 10 into a format in which the static content is included only once in the entire document, similarly as in case of the document 22a. However, unlike the document 22a, the reformatted document 22b includes printable objects 28'. The metadata 30 are converted into a form in which they are included in the printable objects 28', as will be explained in detail below. Encoding metadata 30 into printable objects 28' does not preclude the metadata 30 from being also included in document 22b in their original format though.

Note that the functionality of the converter 10 may alternatively be embedded in the expander 12, the expander 12 doing the conversion of metadata 30 during the expansion process.

When the hard copies have been printed from the expanded document 22c, they are inspected in the quality control section 16, and in case that any printing or finishing errors have occurred which result in an inacceptable quality of some of the printed pages, these pages (and preferably only these pages) have to be reprinted.

For that purpose, the document splitter 18 has access to the expanded document 22c. Based on instructions received from the quality control section 16 or input manually by a user, the document splitter 18 extracts from the document 22c those pages which have to be reprinted, and thereby composes a new document 32c which has the same format as the document 22c but includes only the pages that need to be reprinted, including the metadata that are pertinent to these pages. The document 32c is then sent back to the print engine 14 where it is reprinted.

Document 32c will be in an expanded format, but will be significantly reduced in size compared to document 22c as it only comprises the pages that need to be reprinted.

Therefore, a significantly smaller document is submitted to the print engine 14 reducing bandwidth utilization on a network and storage space utilization in the print engine 14 for sending and storing document 32c compared to document 22c, as well as utilization of the raster image processor and storage space utilization by the raster images.

Note that although Fig. 1 appears to show documents 22a and 22b with a smaller number of pages than document 22c (or document 32c), it is not uncommon that the VDP format used for documents 22a and 22b has the same number of pages as document 22c. For example, it is typical for modern VDP formats to explicitly define every single page to be printed. However, static pages will only contain references to reusable objects, while dynamic pages will typically contain page specific printable objects. (Note that it is possible to form unique, dynamic pages with references to reusable objects.)

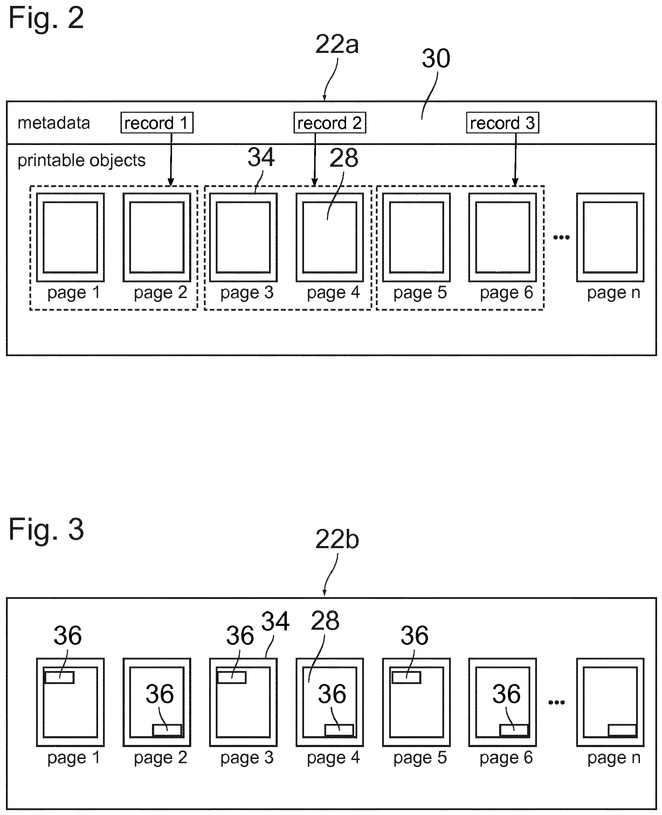

The structure of the document 22a is shown in greater detail in Fig. 2. As described, it includes the printable objects 28 and the metadata 30. The printable objects 28 are grouped into a sequence of pages 34 which are labeled as "page 1 ", ..., "page n" in this example. It will be observed that the metadata 30 are neither grouped into pages nor divided into data items that could be mapped onto the pages, because there is not necessarily a one-to-one mapping between metadata items and pages. This is the reason why the format of the document 22a would be difficult to handle in the document splitter 18.

In the example shown, the pages "page 1" and "page 2" constitute a first record. Similarly, "page 3" and "page 4" form a second record and "page 5" and "page 6" form a third record. The pages "page 1", "page 3", and "page 5" may for example constitute static content by all referencing the same reusable objects that are thus to be replicated for each record. The pages "page 2", "page 4" and "page 6" may constitute variable content, which means that at least some of the printed objects 28 on these pages are different from record to record.

In the format used for the document 22a, the definitions of the records, specifying which pages belong to which records form part of the metadata.

When the document converter 10 converts the document 22a into the reformatted document 22b, it parses the metadata 30 read from the document 22a and translates them into printable but invisible objects 36 and places them onto the pages that constitute the respective records, as has been shown in Fig. 3.

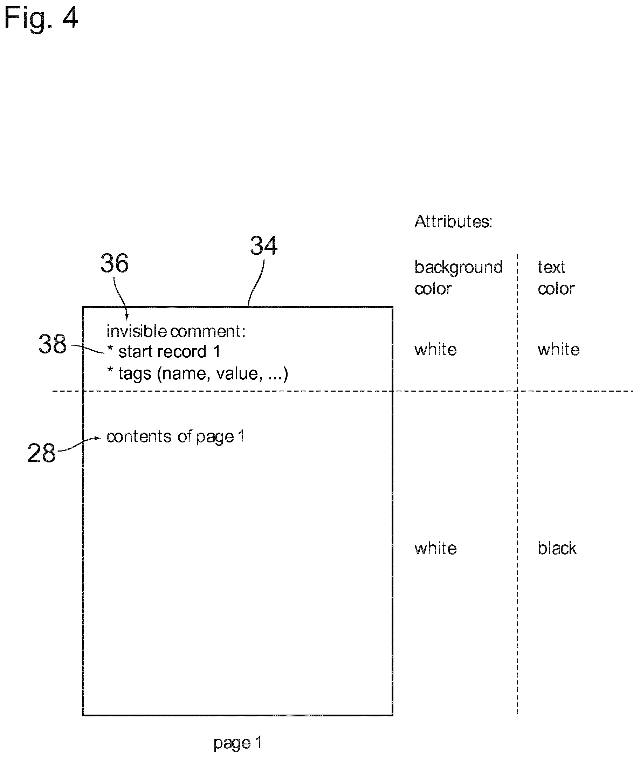

Fig. 4 is an enlarged representation of "page 1" in Fig. 3. As shown in Fig. 4, the extra printable object 36 takes the form of an invisible comment that is inserted on the top margin of the page 34, whereas the other (visible) content of the page is constituted by the printable object 28 that is taken from the document 22a.

In the example shown, the invisible comment comprises two text lines each of which starts with a specific mark 38 (*) which identifies the text line as part of the metadata. The first text line, "start record 1", indicates that the first record starts at this position, i.e. at the top of page 1. The second text line, "tags (name, value, ...)" includes an identifier and other parameters of the first record.

Each text item on the page 34 has attributes which specify how the text is to be rendered. These attributes have been indicated on the right side in Fig. 4. The printable object 28 that constitutes the contents of the page has the attribute "white" for background color and the attribute "black" for the text color, so that the text will be rendered as black letters on a white background. In case of the invisible printable object 36, the text color has been set to "white", i.e. the same color as the background, which makes the text invisible.

Returning to Fig. 3, it will be understood that the invisible printable object 36 on "page 2" marks the end of the first record in a similar way, and the invisible printable objects 36 on the further pages identify these pages as further starts and ends of records.

The reformatted document 22b may be a "normal" PDF document, for example. In that case, the invisible text in the printable objects 36 may be encoded in a text object in a suitably identifiable and interpretable format which can readily be interpreted by the document splitter 18 . Thus, by interpreting the invisible text, the document splitter 18 can retrieve all the information (metadata) that is needed for compiling the document 32c by having access to the metadata and in particular the record structure. Note that the presence of the metadata in the form of the printable objects 36 in document 22b does not preclude the presence in the form as metadata 30 similar to document 22a.

The expander 12 may use either the original metadata 30 if still present in document 22b or may alternatively interpret the printable objects 36 to derive the metadata.

In another embodiment, the reformatted document 22b may be in a multi-layer TIFF format, for example. In that case, the printable objects 36 may be comprised in a layer that encodes the metadata in the pixel data of this layer while the pixel data is being prevented from being rendered by for example another layer on top of the "metadata" layer obscuring the pixels encoding the metadata.

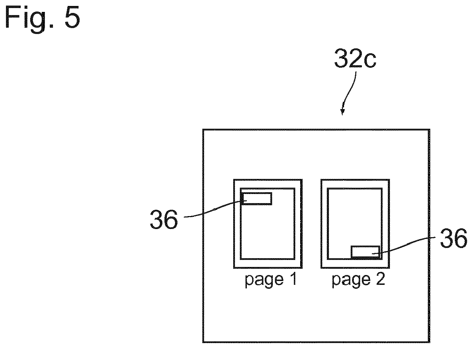

Fig. 5 shows the document 32c that is obtained by extracting two pages from the reformatted document 22c. In this example, the extracted pages are the two pages that constitute the first record. The information that these pages constitute a record is encoded in the invisible printable objects 36 on these pages. Consequently, when the document 32c is resent to the print engine 14 for reprinting these pages, the print engine 14 will receive a document consisting only of page 1 and page 2. Consequently, only these pages (record 1) will be reprinted when the expanded document is sent to the print engine 14 and therefore the network bandwidth needed for submitting the document 32c is substantially lower than resubmitting document 22c. Furthermore, storage space needed for storing document 32c will also be lowered, as well as the storage space needed for the RIPped bitmaps and the CPU load resulting from the RIP.

The major advantage of the present invention is the metadata actually being tied directly to the pages. Typically, the expanded document 22c does not contain the metadata 30 anymore and any record structure or other information stored in it may not be apparent anymore. Due to the metadata being encoded in the printable objects 36, the metadata is still available, and even better, it is still available in document 32c after the document splitter 18 has extracted individual pages from the expanded document 22c. Actually, the invention allows for all kind of document processing tools to be deployed for intermediate processing without the risk of discarding the metadata as long as these tools do not delete or alter the content of printable objects.

It will be understood that the pages that are extracted for being reprinted do not have to comprise a record but might comprise only part of a record and, on the other hand, might include also pages or combinations of pages of the records.

When a record extends to three or more consecutive pages, it may be preferable that each individual page of the record has an invisible printable object identifying that page as part of the record. In that case, it would even be possible to extract only the first few pages of a record in the document splitter 18 in order to reprint only these pages, because all necessary information would be available even though the page marking the end of the record has been clipped away.

## Claims

1. A method of storing record information in a document (22b) in which a record structure of the information is encoded in metadata (30), the document including attributes that specify how the information is to be rendered when the document is reproduced, **characterized in that** the metadata (30) are encoded in the form of printable and machine-readable objects (36) with attributes that prevent these objects from being rendered.

2. The method according to claim 1, wherein the document (22b) comprises a plurality of pages (34), and the printable objects (36) encoding the metadata are placed on each page to which the respective metadata pertain.

3. The method according to claim 1 or 2, wherein the attributes comprise an object color and a background color, and the objects (36) encoding the metadata are prevented from being rendered by setting the object color attribute to be equal to the background color.

4. The method according to claim 1 or 2, wherein the attributes comprise an object transparency, and the printable objects (36) encoding the metadata are prevented from being rendered by setting the object transparency to 100%.

5. The method according to claim 1 or 2, wherein the attributes comprise a position attribute determining the position of the printable object on a page, and the objects (36) encoding the metadata are prevented from being rendered by assigning a position attribute that places them outside of a printable domain.

6. A method of converting a document (22a) in which a record structure of information in the document is encoded in the form of non-printable metadata (30) into a reformatted document (22b), wherein the method according to any of the claims 1 to 5 is used for storing the information in the reformatted document (22b).

7. The method according to claim 6, wherein the document (22a) to be converted is a VDP document, and the metadata comprise information that defines at least one record and a record comprises one or more pages of the VDP document.

8. An apparatus (10) for converting a document (22a) in which a record structure of information in the document is encoded in the form of non-printable metadata (30) into a reformatted document (22b), the apparatus being arranged to implement the method according to claim 6 or 7.

9. A computer program product comprising program code on a machine readable non-transitory medium, the program code, when loaded into a computer for document processing, causing the computer to perform the method according to any of the claims 1 to 7.

10. An apparatus (12) for expanding a source document (22b) obtained by the method according to claim 6 or 7 into an expanded document (22c) in a printable format, the apparatus (12) being configured to retrieve the metadata from the printable and machine-readable objects (36) in the source document (22b).
